# EUROPEAN PATENT APPLICATION

(11) **EP 2 546 940 A1**
(43) Date of publication of application: **16.01.2013**
(21) Application number: 10847355.4
(22) Date of filing: 12.03.2010
(51) Int. Cl.: H02G 1/06, G06K 17/00, H02G 1/00

(54) **INSTALLATION WORK SUPPORTING DEVICE, METHOD THEREFOR, AND PROGRAM**

(71) Applicant: Fujitsu Limited, Kawasaki-shi, Kanagawa 211-8588 (JP)
(72) Inventor: KOBAYASHI, Hiroki, Kawasaki-shi Kanagawa 211-8588 (JP); SATO, Yuichi, Kawasaki-shi Kanagawa 211-8588 (JP); HASHIMA, Masayoshi, Kawasaki-shi Kanagawa 211-8588 (JP); SAZAWA, Shinichi, Kawasaki-shi Kanagawa 211-8588 (JP); KAMEYAMA, Hiroaki, Kawasaki-shi Kanagawa 211-8588 (JP); ABE, Hideki, Kawasaki-shi Kanagawa 211-8588 (JP); KOBAYASHI, Sachio, Kawasaki-shi Kanagawa 211-8588 (JP)
(74) Representative: Stebbing, Timothy Charles
(86) International application number: PCT/JP2010/001804
(87) International publication number: WO 2011/111122

(57) **Abstract**

A system stores identification information for identification of a part associated with installation information for designation of a position where the part is installed in a first apparatus; receives the identification information about the part to be read and transmits it by a second apparatus; and retrieves the received identification information from the storage unit, and generates a first composite image by combining installation information corresponding to the retrieved identification information with an image of the first apparatus.

## Description

### Technical Field

The present invention relates to the technology of supporting an installing operation for installing a part in a target device.

### Background Art

Some electric appliances have a very large number of parts. Recently, many servers have been mutually connected by a cable and in many cases this increases the volume of data to be processed and the load.

The larger the number of parts to be installed, the longer the time required to install each part because a longer time is required to confirm the installation position and the like of a part, or an erroneous installation is easily performed. Thus, an installing operation support device has been created for supporting an installing operation.

One of the conventional installing operation support devices supports an installing operation (wiring operation) for installing a cable provided with connectors (parts) on both ends. The supporting operation is performed by specifying the socket to which the connector of the cable is to be actually connected on the control panel on which a large number of sockets are arranged for connection of a socket. The specification is made by arranging an LED in the vicinity of each socket provided on the control panel, and lighting the LED in the vicinity of the socket to which the connector of the cable is to be connected. Thus, the wiring operation is supported so that a cable can be appropriately installed.

The target of the conventional installing operation support device is a cable to which an RFID tag is installed on each connector (or its vicinity). The identification information read from each RFID tag is associated with one socket. Thus, according to the identification information read from the RFID tag of the connector (cable), the conventional installing operation support device specifies the LED to be turned on.

Since the above-mentioned control panel cannot be used in a system other than the system using the control panel, its versatility is very low. In addition, an arranged LED and the wiring and the like for turning on the LED increases the number of parts included, thereby raising the manufacturing cost and requiring a longer manufacturing time. Thus, it is important to consider having versatility in supporting the installation of parts.

### Document of the Prior Art

Patent Document 1: Japanese Laid-open Patent Publication No. 2007-151383

### Disclosure of Invention

The present invention aims at providing the technology for supporting the installation of parts to various objects (devices).

A system according to the present invention includes: a storage unit for storing identification information for identification of a part and installation information for designation of a position where the part is to be installed on a first apparatus; an identification information reception device for receiving the identification information about a part which is read and transmitted by a second apparatus; and an image generation device for retrieving from the storage unit the identification information received by the identification information reception device, and combining installation information corresponding to the retrieved identification information with an image of the first apparatus, thereby generating a first composite image.

A system according to the present invention can support the installation of a part to various objects (devices).

### Brief Description of Drawings

FIG. 1 is an explanatory view of the configuration of an installing operation support system created using the installing operation support device according to the first embodiment of the present invention;
FIG. 2 is an explanatory view of the configuration of the function of an installing operation support device 1 according to the first embodiment of the present invention;
FIG. 3 is an explanatory view of the cable to be supported by the installing operation support device according to an embodiment of the present invention in the wiring operation;
FIG. 4A is an explanatory view (1) of an example of an RF reader;
FIG. 4B is an explanatory view (2) of an example of an RF reader;
FIG. 5 is an explanatory view of a server room in which a wiring operation of a cable is performed;
FIG. 6 is a concept view for explanation of the configuration of the configuration list data;
FIG. 7 is an explanatory view of the configuration of part data;
FIG. 8 is an explanatory view of the arrangement of the socket expressed by the 3D model data of a server;
FIG. 9 is an explanatory view of the configuration of the wiring information;
FIG. 10A is a flowchart (1) of the wiring operation supporting process;
FIG. 10B is a flowchart (2) of the wiring operation supporting process;
FIG. 11 is an example of a hardware configuration of a computer to which the first embodiment is applied;
FIG. 12 is an explanatory view of the configuration of the installing operation support system created using the installing operation support device according to the second embodiment of the present invention;
FIG. 13 is a flowchart of the composite image generating process;
FIG. 14 is an explanatory view of the configuration of the installing operation support system created using the installing operation support device according to the third embodiment of the present invention; and
FIG. 15 is a flowchart explaining the procedure of laser pointer setting.

### Best Mode for Carrying Out the Invention

The embodiments of the present invention are described below in detail with reference to the attached drawings.

### <First Embodiment>

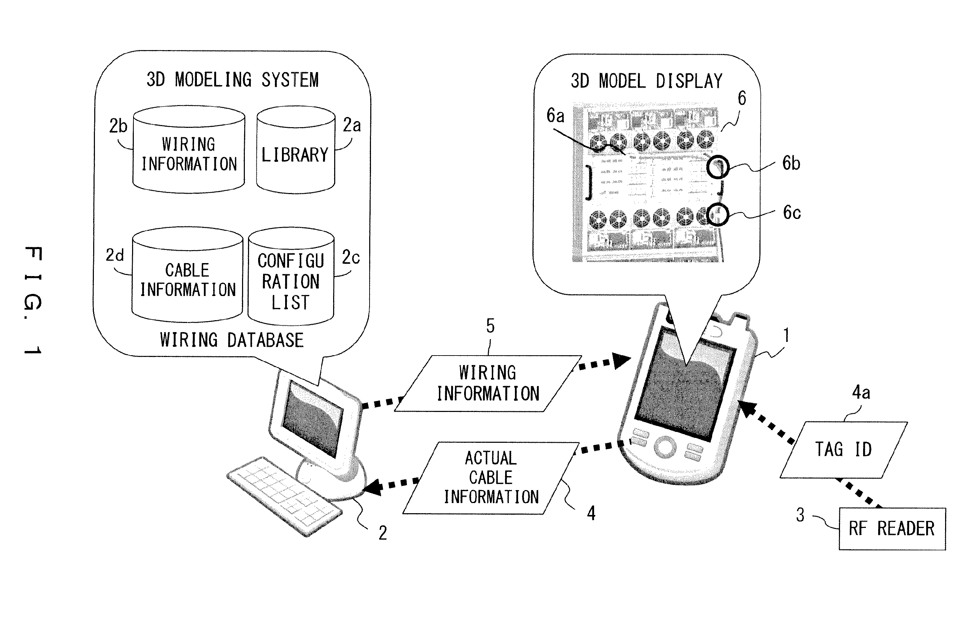

FIG. 1 is an explanatory view of the configuration of an installing operation support system created using the installing operation support device according to the first embodiment of the present invention. The installing operation support system includes, as illustrated in FIG. 1, an installing operation support device 1 according to the present embodiment, a 3D (3-dimensional) modeling system 2, and an RF reader 3.

The installing operation support device 1 according to the present embodiment is in practice a portable personal computer (PC) provided with a display device, or a PDA. That is, the device is realized by the computer (data processing device) executing the program (installing operation support program) for supporting the installing operation for installing a part. Since the computer realizes the installing operation support device 1, the installing operation can be performed in various locations (where a part is installed).

Recently, using the design data of an object to which a transformable linear structure such as a cable, a wire harness, a tube for a fluid to flow through, etc., a wiring route for arranging the linear structure is designed on a virtual 3-dimensional space. The installing operation support device 1 according to the present embodiment is realized for supporting the wiring operation for installing a linear structure as a part.

The modeling system 2 is in practice a database (DB) server, for example, for managing various types of design data such as an object, a wiring route, etc. The data communications with the installing operation support device 1 are performed through, for example, a LAN having an access point. To avoid confusion in this specification, the linear structure is hereafter assumed to be a cable having one connector on either end, that is, to be only a linear structure which connects two connectors as attaching/detaching parts using linear parts. A part for connecting a connector is hereafter referred to as a "socket". A linear part for connecting two connectors is hereafter referred to as a "signal line" for easy discrimination from a cable 30.

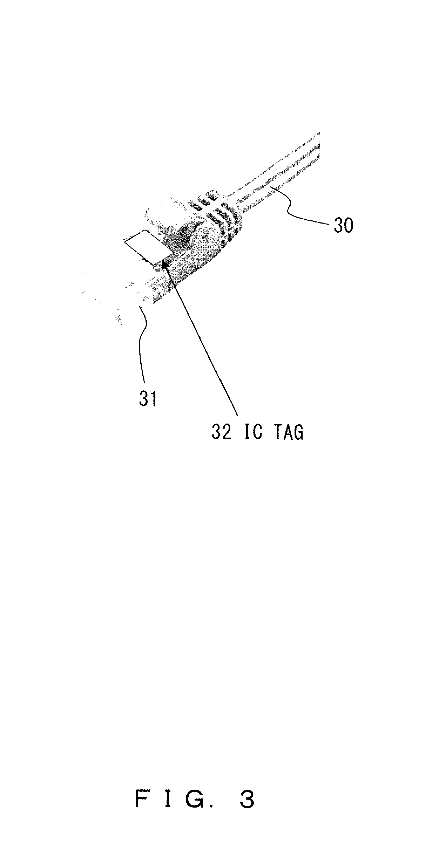

FIG. 3 is an explanatory view of the cable to be supported by the installing operation support device according to the present embodiment in the wiring operation. In the present embodiment as illustrated in FIG. 3, it is assumed that the wiring operation of the cable 30 for which an IC tag (RFID tag) 32 is attached to each connector 31 is supported.

Each cable 30 is managed according to cable information. The cable information has a configuration including data of, for example, a cable ID, a first IC tag ID, a second IC tag ID, a cable length, and a cable type. In practice, content of the data are, for example, the cable ID = 101, the first IC tag ID = 101A, the second IC tag ID = 101B, the cable length = 5m, and the cable type = LAN cable. Since cable ID data, first IC tag ID data, and second IC tag ID data are assigned the content above, the cable ID data can be designated from any of the first and second IC tag ID data. The first IC tag ID data is stored as identification information in the IC tag 32 attached to one connector 31 of the cable 30, and the second IC tag ID data is stored as identification information in the IC tag 32 attached to the other connector 31.

The RF reader 3 is for reading identification information (a tag ID) from the IC tag 32 attached to the connector 31 of the cable 30. When the tag ID is read from the IC tag 32, the RF reader 3 transmits its tag ID 4a to the installing operation support device 1 using, for example, the short-distance wireless communication technology as illustrated in FIG. 1. The transmission and reception of the tag ID 4a can be performed using a communication technology other than the short-distance wireless communication technology. That is, the transmission and reception can also be performed by cable. It is also possible to load a plurality of selectable communication technologies so that one of the loaded communication technologies can be selected. For convenience in this specification, only the short-distance wireless communication technology is considered.

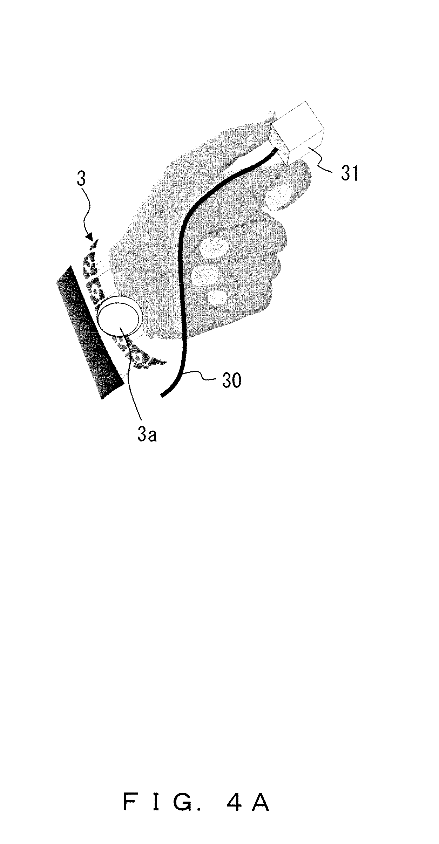

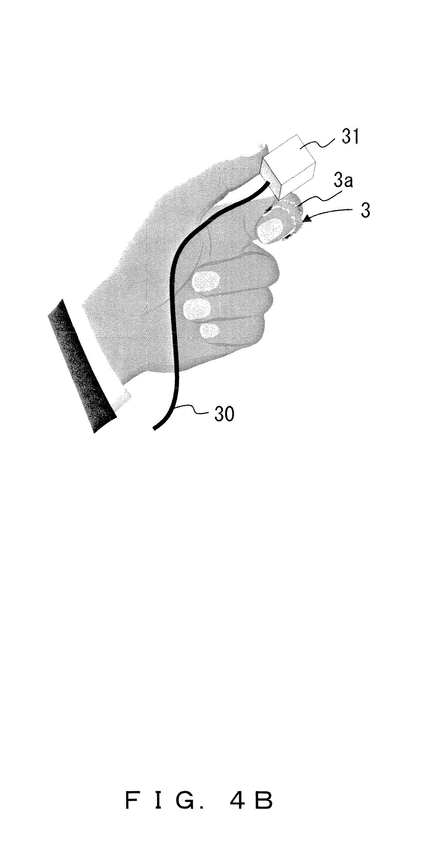

FIGS. 4A and 4B are explanatory views of examples of the RF reader 3.
The connection of the connector 31 to a socket is normally made by an operator holding the connector 31 with his or her hand. Thus, according to the present embodiment, a device capable of using a communication unit 3a for reading the tag ID 4a from the IC tag 32 on the wrist or the finger of the operator is adopted so that the tag ID 4a can be read from only the IC tag 32 of the connector 31 held by the operator.

The installing operation support device 1 supports the wiring operation of attaching the cable 30 by displaying each socket for connection of each connector 31 of the cable 30 and the wiring route using the data managed by the 3D modeling system 2. Since the device is manufactured according to its design, the wiring route of the cable 30 designed on the virtual 3-dimensional space using the design data expresses the wiring route on which the cable 30 is actually attached. Accordingly, the wiring operation is supported using the data managed by the 3D modeling system 2. Since the result of the design and the like of the wiring route can be used as is in instructing in the actual method of performing the wiring operation, the support of the wiring operation can be appropriately performed with the load suppressed.

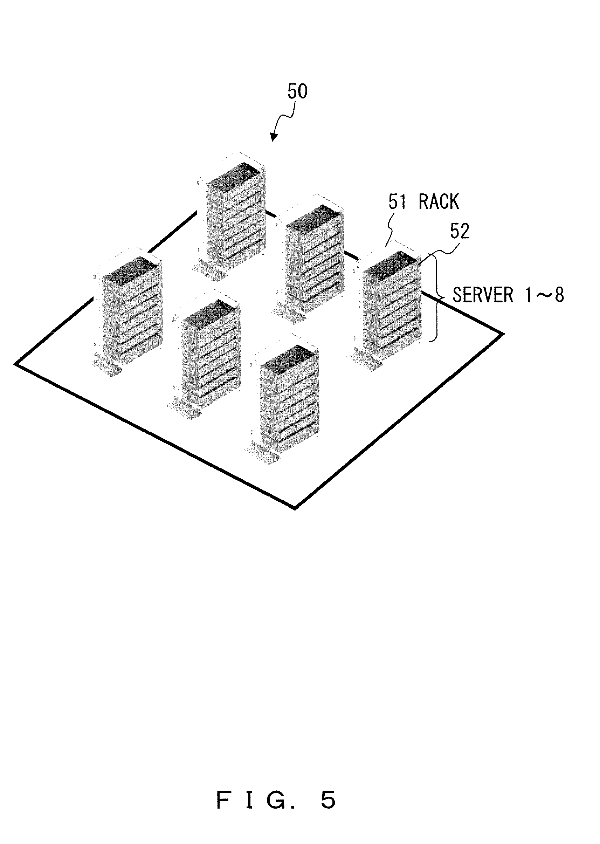

The 3D modeling system 2 in which the installing operation support device 1 acquires data manages a library DB 2a, wiring information DB 2b, a configuration list DB 2c, and cable information DB 2d as illustrated in FIG. 1, for example. The cable information DB 2d stores the cable information for each cable 30. Before explaining the support of the wiring operation by the installing operation support device 1, the data stored in other library DBs 2a through 2c is concretely described with reference to FIGS. 5 through 9.

FIG. 5 is an explanatory view of a server room in which the wiring operation of the cable 30 is performed. A server room 50 is designed to, for example, suppress the increase in the volume of data to be processed and the load, or to provide cloud computing. In a broad sense, it corresponds to an object (device) to which the cable 30 is attached. The target server room 50 is provided with a plurality of racks 51 capable of storing a plurality of servers 52. Thus, the cable 30 is used in connecting the servers 52 and the like. The data stored in the library DB 2a, the wiring information DB 2b, and the configuration list DB 2c is described below by exemplifying the data involved in the design of the server room 50.

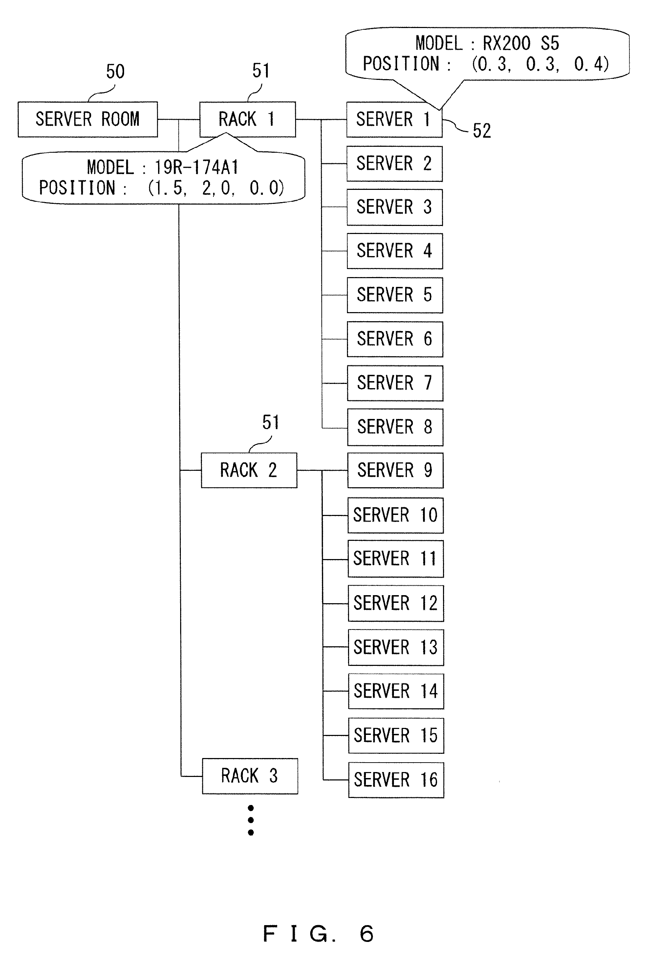

The configuration list DB 2c stores for each target the configuration list data indicating the device as a component of the target and the arrangement of the device. FIG. 6 is a concept view for explanation of the configuration of the configuration list data. As illustrated in FIG. 6, the configuration list data indicates the rack 51 arranged in the server room 50 and the server 52 loaded into each rack 51. The rack 51 and server 52 are each expressed by model data indicating the model, position data indicating the position (coordinates) in the arrangement on the virtual 3-dimensional space, analog data, etc.

The position data and the analog data are, for example, the numeric data relatively expressed by an upper component in the configuration list data as a reference. Thus, in the rack 51 for example, the position data indicates the displacement of the reference point of the rack 51 from the reference point of the server room 50, and the analog data indicates the angle between the reference direction of the server 52 and the reference direction of the server room 50. Afterwards, the component of the target is referred to as a "part", and the upper part is referred to as a "parent part".

The analog data exists for each 3-dimensional coordinate axis, but is ignored for convenience in this specification. The position data and the analog data are not relative based on a parent part, but those based on the origin of the coordinate system of a virtual 3-dimensional space (including a target) can be selected. However, this is also ignored for convenience.

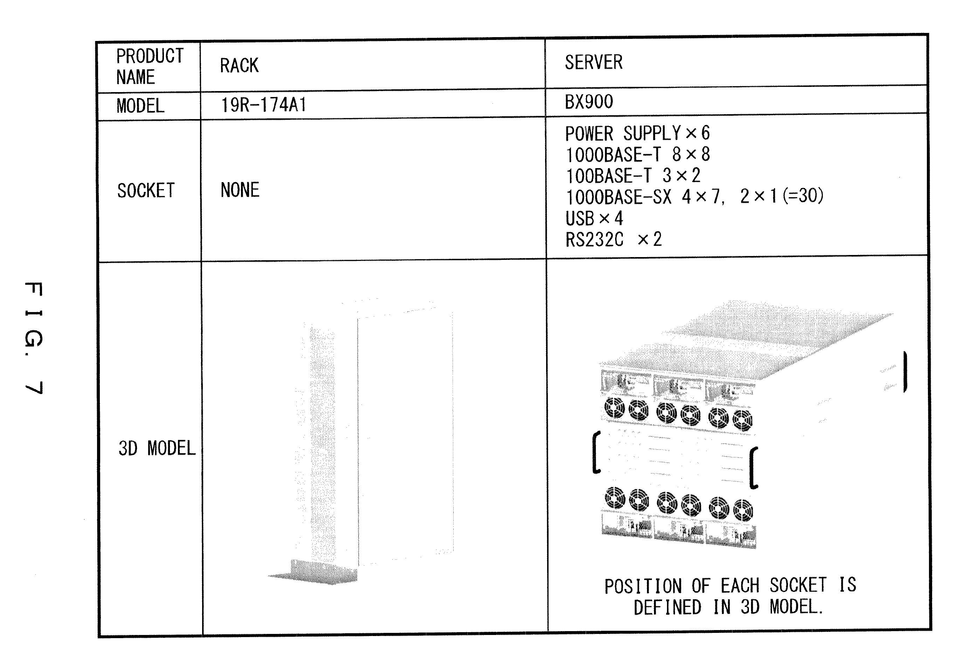

The library DB 2a stores the part data indicating the details of the part for each part which can be arranged. FIG. 7 is an explanatory view of the configuration of part data. As illustrated in FIG. 7, each piece of part data has a configuration provided with part name data indicating the name of a part, socket data indicating a provided socket, and 3D model data indicating the shape and the like. FIG. 7 also illustrates the data of the rack 51 and the 52 as part data.

In FIG. 7, "power supply × 6" indicates that there are three power supply sockets. "1000BASE-T", "100BASE-T", and "1000BASE-SX" indicate LAN standards. The notation subsequent to the LAN standard indicates the number of sockets of the LAN standard and the arranging method. Thus, for example, "8 × 8" after "1000BASE-T" indicates that there are eight sockets of the 1000BASE-T standard arranged in a group. "USB × 4" indicates that there are four sockets of the USB standard. "RS-232C × 2" indicates that there are two sockets of the RS-232C standard.

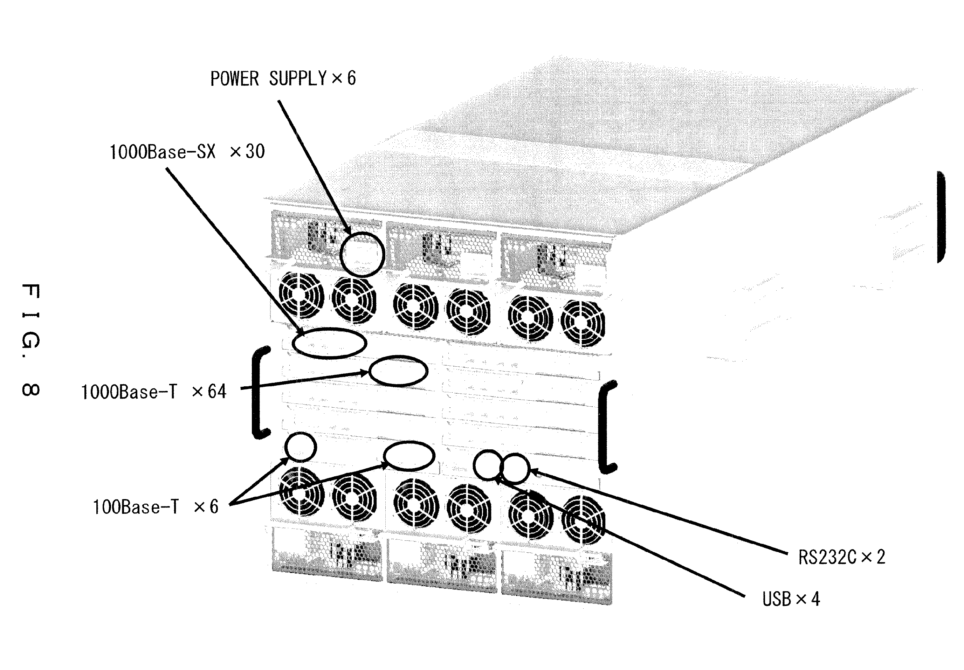

FIG. 8 is an explanatory view of the arrangement of the socket expressed by the 3D model data of the server 52. In FIG. 8, a socket is extracted for each standard and enclosed by a circle.
The 3D model data includes shape data indicating the shape of the virtual 3-dimensional space of a part (server 52) and position data indicating the position of the socket expressed by the shape data. The position data indicates, for example, the displacement from the reference point of the server 52, and is provided for each socket. Each socket is assigned an identification number for each type, for example. Thus, the position data is managed by, for example, an identification number, the type data indicating the type of a socket, etc. The position of a relative socket based on the rack 51 as a parent part is calculated using the position data of the socket and the position data of the server 52.

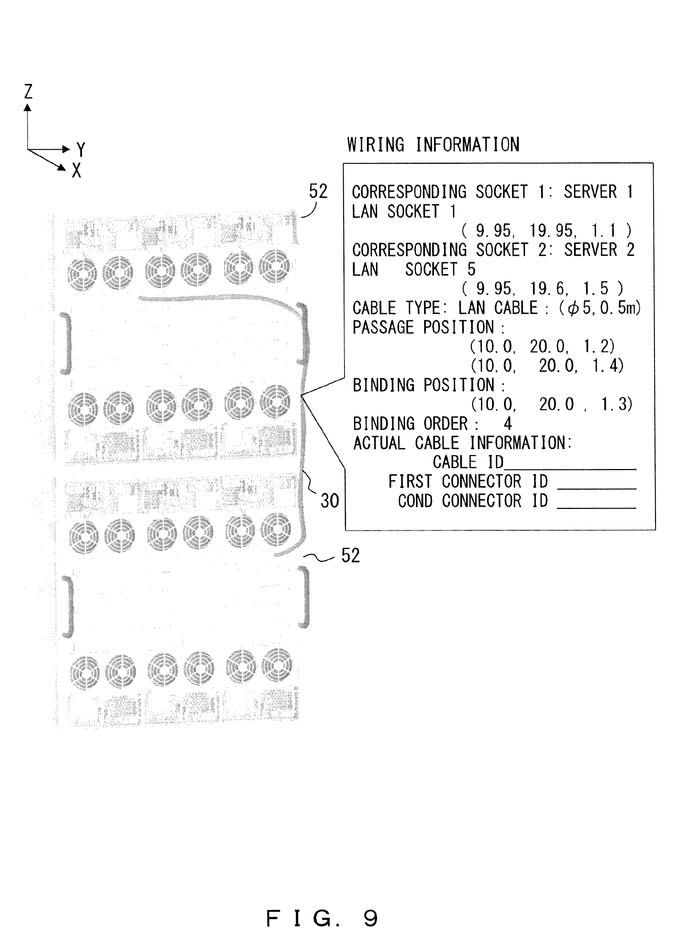

As illustrated in FIG. 8, there are a number of sockets in each server 52. The wiring information DB 2b stores the wiring information indicating the result of the wiring design of the cable 30 for each cable connected to the socket provided for any of the servers 52. FIG. 9 is an explanatory view of the configuration of wiring information.

FIG. 9 illustrates corresponding socket 1 data, corresponding socket 2 data, cable type data, passage position data, binding position data, binding order data, and actual cable information as the data configuring the wiring information, and the concrete content is expressed with ":" interposed. The content of the expression is an example of the cable 30 which connects two servers 52 through the socket of 1000BASE-SX. The data and the content are described below.

The wiring design of the cable 30 corresponds to determining, for example, the wiring route from the starting point (a socket) to the ending point (another socket). The corresponding socket 1 data indicates the socket specified as the starting point at the wiring design. The expressions "server 1", "LAN socket 1", and "(9.95, 19.95, 1, 1)" as the concrete content respectively indicate "the socket is provided for the server 52 assigned 1 as the identification number (socket number) ", "1 is assigned as the identification number (socket number) in the LAN sockets provided for the server 52", and "the position is (coordinates are)"(9.95, 19.95, 1, 1)". "(9.95, 19.95, 1, 1)" expressed as the position (coordinates) data is based on, for example, the server room 50. The data is based on the server room 50 because the cable 30 is connected between different racks 51. Thus, it is not necessary to calculate the position of the socket in the server room 50, and the position can be easily known by the operator intuitively. When the position data of each part is relative data based on the parent part, the coordinates of each of X, Y, and Z are calculated using, in addition to the position data of the LAN socket, the position data of the server 52, and the position data of the rack 51 for storing the server 52. Similarly, the corresponding socket 2 data indicates the socket specified as the ending point. The expressions "server 2", "LAN socket 5", and "(9.95, 19.6, 1, 5)" as the concrete content respectively indicate "the socket is provided for the server 52 assigned 2 as the identification number", "5 is assigned as the identification number in the LAN sockets provided for the server 52", and "the position is (coordinates are)"(9.95, 19.6, 1, 5)".

The cable type data indicates the cable 30 for use in connecting the sockets expressed by the corresponding socket 1 data and the corresponding socket 2 data. As the content in practice, the expression "LAN cable (φ5, 0.5m)" indicates that a LAN cable of 5mm width and 0.5m length is to be used as the cable 30.

In the wiring design of the cable 30, for example, the wiring route between the starting point and the ending point is to be determined by specifying the position (passage position) to be passed by the cable 30. In addition, the position where the cable 30 is to be fixed in the wiring route can be specified as the binding position. Thus, the wiring route is designed to pass the passage point and/or the binding position as the line connecting the starting point and the ending point. The passage position data indicates the specified passage position, and the binding position data indicates the specified binding position. There are a number of pieces of data specified by the designer for each of the passage position data and the binding position data. Therefore, FIG. 9 illustrates that the designer specifies two passage positions and one binding position.

Both the passage position data and the binding position data indicate the positions by the displacement from the reference point of, for example, an object (the server room 50 in this example). It is preferable that the relative position data by the reference point of an object be adopted when there are a number of cases in which the cable 30 connects the servers 52 accommodated in different racks 51. However, when the cable 30 connects the servers 52 accommodated in the same rack 51, the relative position data can be adopted based on the reference point of the rack 51. In the X, Y, and Z coordinates expressed as the passage position data and the binding position data in FIG. 9, the X and Y coordinates are the same, and only the Z coordinates are different. This means that the designer has specified two passage positions and one binding position with the vertical position of the server room 50 changed.

The binding order data indicates the order in which the wiring operation is to be performed. The order is assigned to each rack 51, for example, and the order in which the wiring design is performed is automatically assigned as a default.

The actual cable information is for designating the cable 30 actually attached in the wiring operation, and includes the cable ID data, the first connector ID data, and the second connector ID data. As the first connector ID data, the identification information first read in the IC tags 32 attached to the connector 31 of the cable 30 is stored. The identification information read next is stored as the second connector ID data. The cable ID data is stored with, for example, the first connector ID data.

The installing operation support device 1 receives the part data managed by the 3D modeling system 2, wiring information 5, and the like, and generates and displays an image (hereafter referred to as a "wiring image" for discrimination from other images) including a part for attaching the cable 30 and the wiring route of the cable 30. The reference numeral 6 in FIG. 1 indicates the wiring image. The wiring image 6 includes a socket 6a (starting point) for attaching the connector 31 of the cable 30, a passage position 6b for passing a signal line, and a binding position 6c at which the signal line is to be fixed.

According to the present embodiment, the wiring operation of the cable 30 is supported by generating and displaying the wiring image 6. Therefore, regardless of the type of the part to be attached and the object (device) to which the part is attached, the operation of attaching the part can be supported, thereby realizing great versatility.

As described above, the IC tag 32 is attached to each connector 31 of the cable 30, and the operator who performs the wiring operation attaches the RF reader 3 as displayed in FIG. 4A or 4B to his or her hand. Thus, according to the present embodiment, whether or not the operator holds the connector 31 in his or her hand and the order of the connector 31 can be designated. Whether or not the operator holds the connector 31 and the order of the connector 31 in the operator's hand are information about the process of the wiring operation performed by the operator because the wiring operation of the cable 30 is normally performed in the order of attaching to the socket one connector 31 held by the operator's hand → passing a signal line along the wiring route → attaching to the socket the remaining connector 31 held by the operator's hand and so on.

The RF reader 3 transmits the tag ID 4a read from the IC tag 32. The installing operation support device 1 designates the process of the wiring operation performed by the operator according to the tag ID 4a received from the RF reader 3, and provides the information for support of the appropriate wiring operation by displaying the wiring image 6 in accordance with the result of the designation. Thus, according to the present embodiment, the information about the instructions of the content of the operations to be performed are provided stepwise in the order of the instruction for the socket to which the first connector 31 is attached → the instruction for the wiring route of the signal line of the cable 30 depending on the passage position or the binding position → the instruction for the socket to which the second connector 31 is attached. Thus, in the example illustrated in FIG. 1, the important positions in performing the appropriate operations in the order of the socket 6a → the passage position 6b → the binding position 6c are sequentially specified. The instructions for the content of the operations to be performed are provided stepwise so as to avoid the confusion caused by there being a number of pieces of information. That is, an operator can perform appropriate wiring operations without fail by simplifying the content of the operations to be performed and by quickly understanding the operations to be performed.

As a result of the operator performing the wiring operation as described above, the installing operation support device 1 receives two tag IDs 4a from the RF reader 3. The two tag IDs 4a are stored as the first and second connector ID data of the actual cable information. Thus, actual cable information 4 whose content is determined is transmitted from the installing operation support device 1 to the 3D modeling system 2 as illustrated in FIG. 1, and is entered in the wiring information DB 2b.

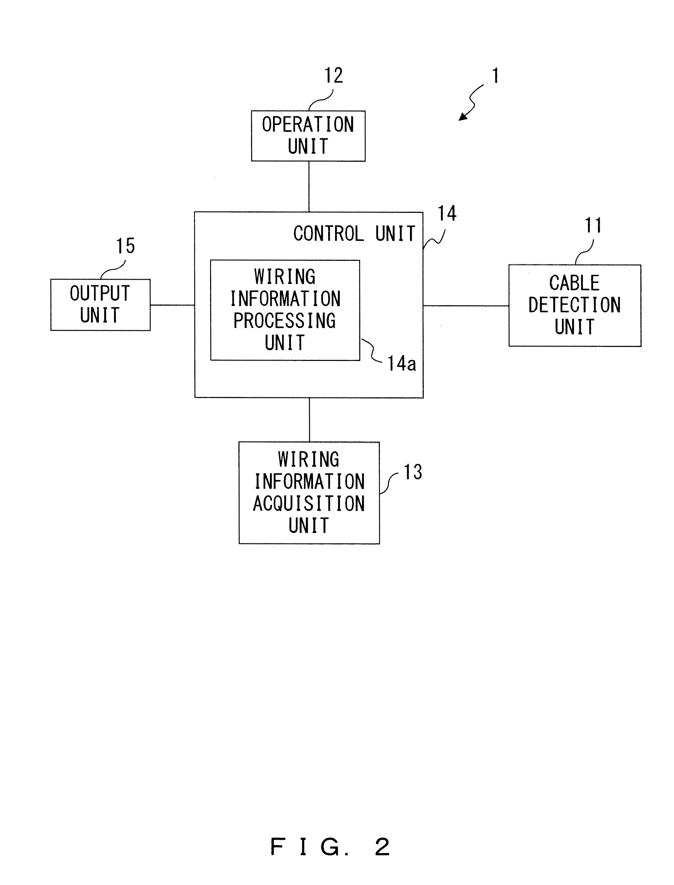

FIG. 2 is an explanatory view of the configuration of the function of the installing operation support device 1 according to the first embodiment of the present invention. Described in practice below is the configuration of the installing operation support device 1 capable of issuing the instructions for the content of the operation in a stepwise manner as described above.

The installing operation support device 1 includes a cable detection unit 11, an operation unit 12, a wiring information acquisition unit 13, a control unit 14, and an output unit 15 as illustrated in FIG. 2. These units have the following functions.

The cable detection unit 11 detects (the connector 31 of) the cable 30 held by the operator. The RF reader 3 reads the tag ID 4a from the IC tag 32 attached to the connector 31 held by the operator. Thus, the cable detection unit 11 receives and processes the tag ID 4a transmitted from the RF reader 3, and read it as the designation of the process of the wiring operation.

The operation unit 12 is for performing various operations by an operator. In practice, it is realized by, for example, various keys, a circuit for detecting the operations to the various keys, etc.
The wiring information acquisition unit 13 is for performing data communications with the 3D modeling system 2, and acquiring information including the wiring information 5 from the 3D modeling system 2.

The control unit 14 is for controlling the entire installing operation support device 1. It includes a wiring information processing unit 14a for generating the wiring image 6 using the wiring information 5, part data, etc. acquired by the wiring information acquisition unit 13. The output unit 15 displays the generated wiring image 6.

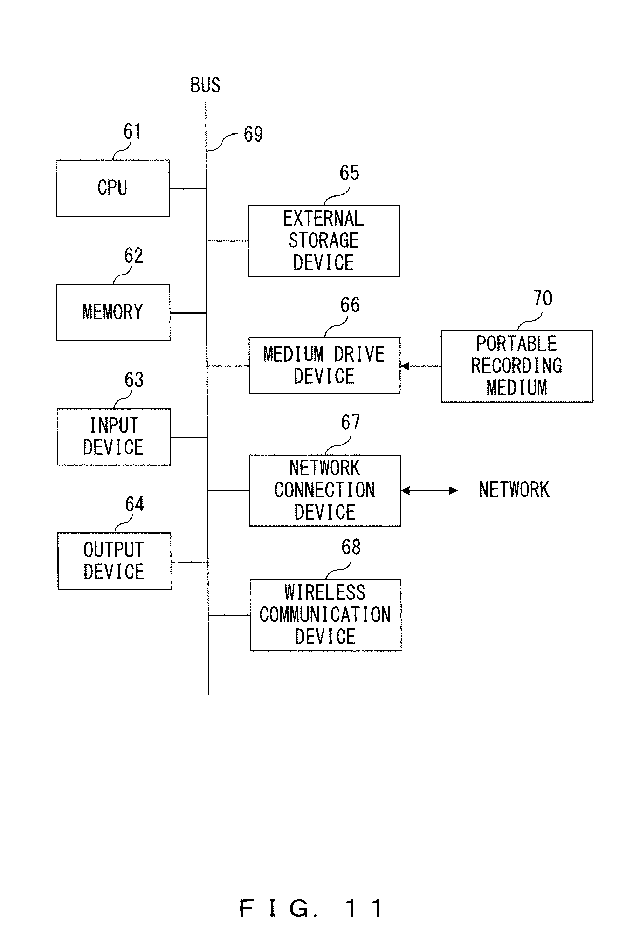

The configuration illustrated in FIG. 2 is realized by directing a computer (data processing device) to execute an installing operation support program as described above. FIG. 11 is an example of a hardware configuration of a computer to which the present embodiment is applied. An example in practice of the configuration of the computer available as the installing operation support device 1 is described below with reference to FIG. 11.

The computer illustrated in FIG. 11 includes a CPU 61, memory 62, an input device 63, an output device 64, an external storage device 65, a medium drive device 66, a necessary connection device 67, and a wireless communication device 68, and these units are interconnected through a bus 69. The configuration illustrated in FIG. 11 is an example, and the present invention is not limited to this configuration.

The CPU 61 controls the entire computer. Although only one computer is illustrated in FIG. 11, there can be a plurality of CPUs 61 installed.
The memory 62 is semiconductor memory for temporarily storing a program or data stored in the external storage device 65 (or a portable recording medium 70) when the program is executed, or data is updated or the like. The CPU 61 controls the entire computer by reading the program to the memory 62 and executing the program.

The input device 63 is provided with an operation device such as a keyboard or the like operated by an operator, and a detection device for detecting the operation performed on the operation device. The detection device detects the operation of the user on the operation device, and notifies the CPU 61 of the detection result.

The output device 64 includes, for example, a display device and a display control device connected to the display device. The wiring image 6 illustrated in FIG. 1 is displayed on the display device of the output device 64. The external storage device 65 is a large capacity storage device such as flash memory, a hard disk device, etc. It is mainly used for storing various data and programs.

The medium drive device 66 accesses the portable recording medium 70 such as a memory card or the like. The necessary connection device 67 enables the communications to be performed with an external device through, for example, a communication network. The data communication with the 3D modeling system 2 is performed through the necessary connection device 67. The wireless communication device 68 enables short-difference wireless communications to be performed. The IC tag transmitted from the RF reader 3 is received by, for example, the wireless communication device 68.

The above-mentioned installing operation support program is stored in the external storage device 65 or the portable recording medium 70, or acquired by the necessary connection device 67 through a communication network. The installing operation support device 1 can be realized by reading the installing operation support program to the memory 62 and executing it by the CPU 61.

With the configuration illustrated in FIG. 11, each unit illustrated in FIG. 2 is realized by combining the following. For convenience in this specification, it is assumed that the installing operation support program is stored in the external storage device 65, the data communication with the 3D modeling system 2 is performed through the necessary connection device 67, and the data communication with the RF reader 3 is performed through the wireless communication device 68.

In the assumption above, the cable detection unit 11 is realized by the CPU 61, the memory 62, the external storage device 65, the wireless communication device 68, and the bus 69. The operation unit 12 is read by the CPU 61, the memory 62, the input device 63, the external storage device 65, and the bus 69. The wiring information acquisition unit 13 is realized by the CPU 61, the memory 62, the external storage device 65, the necessary connection device 67, and the bus 69. The control unit 14 is realized by the CPU 61, the memory 62, the external storage device 65, and the bus 69. The output unit 15 is realized by the CPU 61, the memory 62, the output device 64, the external storage device 65, and the bus 69.

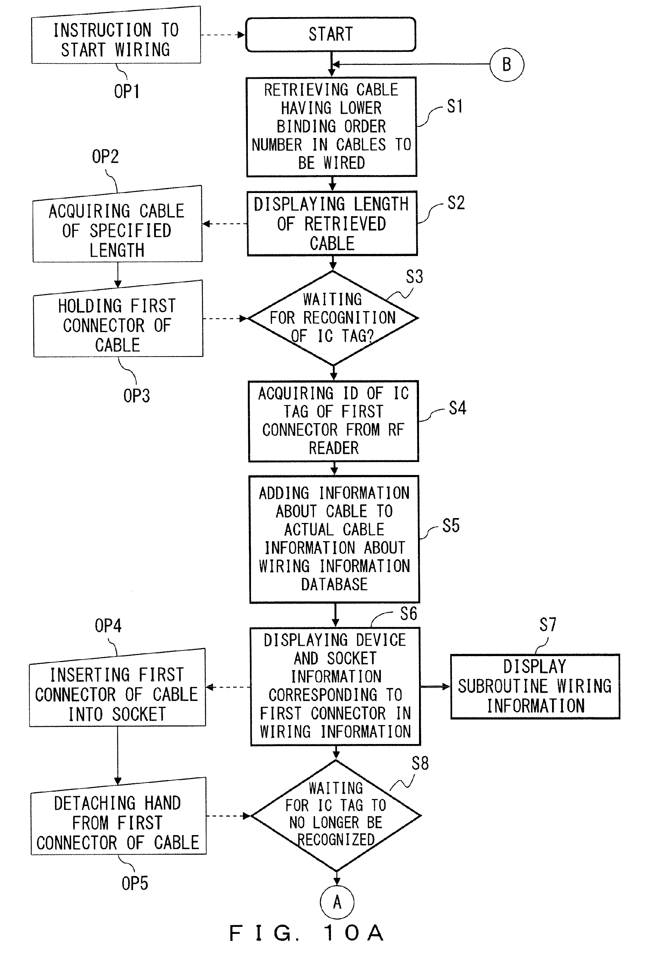

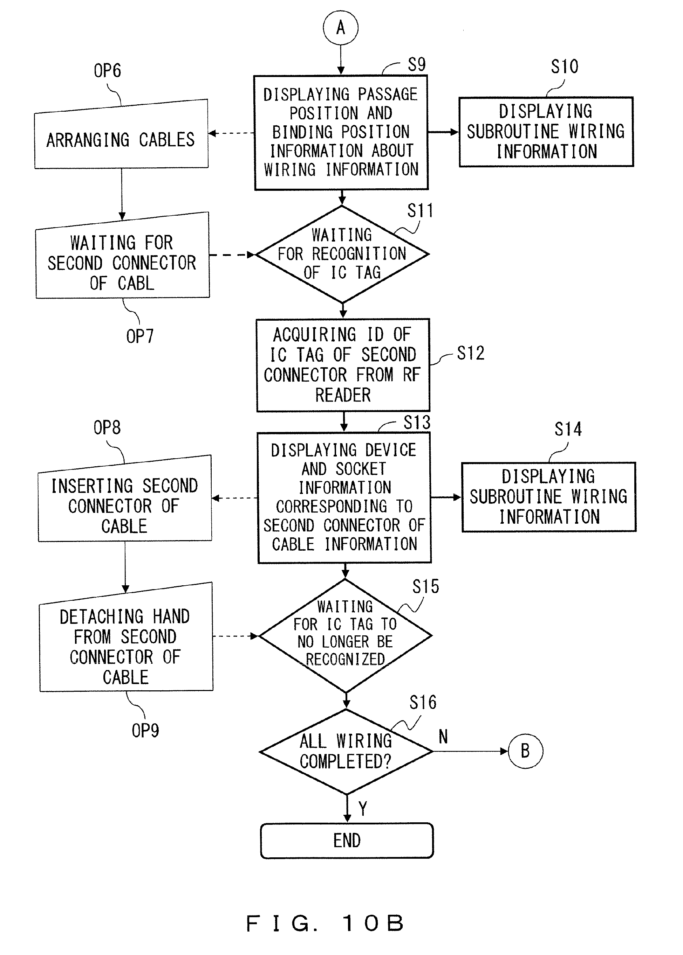

FIGS. 10A and 10B are flowcharts of the installing operation supporting process. The operation of the installing operation support device 1 is described below in detail with reference to FIGS. 10A and 10B.
The installing operation supporting process is realized by the CPU 61 illustrated in FIG. 11 executing the installing operation support program. For convenience in FIGS. 10A and 10B, the operation to be performed by an operator for the wiring operation is illustrated in addition to the process performed by the CPU 61. To clarify the discrimination from the process performed by the CPU 61, the operations to be performed by the operator are assigned reference numerals starting with "OP", and the processes performed by the CPU 61 are assigned reference numerals starting with "S", thereby describing in detail the processes together with the operations performed by the operator.

The installing operation supporting process is activated by the operator issuing the instruction to start the wiring operation (step OP1). The start instruction can be actually issued by first activating the installing operation support program, and then selecting the position on which the wiring operation is performed. For example, the configuration list data, the cable information DB 2d, the wiring information 5 about the target position, and the part data about the part existing on the target position are not specifically illustrated in the attached drawings, but are transmitted from the 3D modeling system 2 to the installing operation support device 1 at the start instruction.

In step S1, upon receipt of the start instruction, the CPU 61 searches for the wiring information having the smallest binding order data not including information having the binding order number, that is, the information including the binding operation performed in the selected positions, and extracts the corresponding wiring information. As described above, the actual cable information 4 is entered into the wiring information indicating the completion of the corresponding wiring operation. Thus, the wiring information 5 which can be extracted by the 3D modeling system 2 includes no actual cable information 4. In addition, the wiring image 6 is generated using the wiring information 5, the 3D model data about parts, and the configuration list data. In this case, the configuration list data is used in determining the arrangement of the 3D model data of parts.

After extracting the wiring information 5, the CPU 61 displays the type, the length, and the like of the cable 30 to be used in the wiring operation on the display device of the output device 64 in step S2. Afterwards, in step S3, it waits for the recognition of the IC tag 32. The recognition of the IC tag 32 is performed by the RF reader 3, and the recognition of the IC tag 32 corresponds to the reception of the tag ID 4a from the RF reader 3.

According to the information displayed on the display device, the operator acquires the corresponding cable 30 (step OP2), and holds a connector 31 of the cable 30 (step OP3). By holding the connector 31 with the operator' s hand, the RF reader 3 reads the tag ID 4a from the IC tag 32 and transmits it. As a result, the CPU 61 transfers control from step S3 to step S4.

In step S4, the CPU 61 acquires the tag ID 4a of the IC tag 32 of the connector 31 received from the RF reader 3. In the next step S5, the CPU 61 stores the tag ID 4a acquired as the first connector ID data of the actual cable information 4 of the wiring information 5, and stores the cable ID data acquired from the tag ID 4a. In the next step S6, the CPU 61 displays the wiring image 6 with the socket 6a indicated by the corresponding socket 1 data of the wiring information highlighted on the display device of the output device 64.

The socket 6a is highlighted to easily locate the socket into which the connector 31 held by the operator's hand is inserted. According to the present embodiment, the socket is highlighted by the animation in which the relatively large circle enclosing the socket 6a is gradually reduced, or the animation in which the display state of the socket 6a (display color or brightness) is changed. The highlighting is realized by executing the subroutine process for display of the animation for the highlighting. The highlighted socket 6a is specified by the position data in, for example, the corresponding socket 1 data. Thus, in step S6, the prohibition of the execution of the subroutine is released. By the release of the prohibition of the execution, the CPU 61 executes the subroutine process in step S7 in addition to the installing operation supporting process until the prohibition is resumed. Since the subroutine process can be realized by well-known technology, the details are omitted here. After starting the highlighted display of the socket 6a, the CPU 61 transfers control to step S8, and waits until the IC tag is no longer recognized.

By the highlighted socket 6a, the operator inserts the connector 31 into the socket into which the connector is to be inserted (step OP4), and detaches his or her hand from the connector 31 (step OP5). Thus, the transmission of the tag ID 4a from the RF reader 3 is stopped. As a result, the CPU 61 passes control from step S8 to step S9 in FIG. 10B. When control is passed to step S9, the subroutine process executed in step S7 is stopped.

In step S9, the CPU 61 highlights the passage position of the wiring information or the position on the wiring image 6 indicated by the binding position data. The highlighting is realized by, for example, executing the subroutine process in which the display state of the passage position or the binding position is gradually changed. Thus, in step S9, the prohibition of the execution of the subroutine process is released. By the release of the prohibition of the execution, the CPU 61 executes the subroutine process in step S10 in addition to the installing operation supporting process until the prohibition is resumed. Since the subroutine process can be realized by well-known technology, the details are omitted here. After starting the highlighting of the passage position or the binding position, the CPU 61 waits until the IC tag is recognized by passing control to step S11.

By the highlighting of the passage position or the binding position, the operator performs the process of passing a signal line through a corresponding path (step OP6), and then holds with his or her hand the connector 31 not yet inserted (step OP7). Thus, the tag ID 4a is transmitted from the RF reader 3. As a result, the CPU 61 passes control from step S11 to step S12. When control is passed to step S12, the execution of the subroutine process in step S10 is prohibited.

In step S12, the CPU 61 acquires the tag ID 4a of the IC tag 32 of the connector 31 received from the RF reader 3. In the next step S13, the CPU 61 stores the tag ID 4a acquired as the second connector ID data of the actual cable information 4 of the wiring information 5, and displays the wiring image 6 in which the socket indicated by the corresponding socket 2 data of the wiring information 5 on the display device of the output device 64.

The highlighting of the socket is realized by, for example, executing the subroutine process with the highlighting of the socket 6a. Thus, in step S13, the prohibition of the execution of the subroutine process is released. By the release of the prohibition of the execution, the CPU 61 executes the subroutine process in step S14 in addition to the installing operation supporting process until the prohibition is resumed. Since the subroutine process can be realized by well-known technology as with other subroutine processes, the details are omitted here. After starting the highlighting of the socket, the CPU 61 passes control to step S15, and waits until the IC tag is no longer recognized.

By the highlighted socket, the operator inserts the connector 31 into the socket into which the connector is to be inserted (step OP8), and detaches his or her hand from the connector 31 (step OP9). Thus, the transmission of the tag ID 4a from the RF reader 3 ceases. As a result, the CPU 61 passes control from step S15 to step S16. When control is passed to step S16, the execution of the subroutine process to be executed in step S14 is prohibited.

In step S16, the CPU 61 determines whether or not all wiring operations of the wiring information 5 received from the 3D modeling system 2 have been completed. If there is any received wiring information 5 storing no actual cable information 4, then the determination is NO because there is another wiring operation to be performed, thereby returning control to step S1. Thus, a similar process is performed on another piece of target wiring information 5. On the other hand, if there is no wiring information 5 which stores no actual cable information 4, the determination is YES because it is assumed that the wiring operation at the position specified by the operator has been completed. Accordingly, the wiring information 5 including the actual cable information 4 is transmitted to the 3D modeling system 2 and the wiring information DB 2b is updated, thereby terminating the installing operation supporting process.

Thus, according to the present embodiment, the progress of the wiring operation is grasped using the result of the recognition of the IC tag 32 by the RF reader 3, thereby supporting the operation in a timely manner in accordance with the progress of the operation. Thus, since the operator can easily confirm the content of the operation to be performed in accordance with the current situation, the operation can be quickly and appropriately performed.

According to the present embodiment, by deleting from the wiring image 6 the image of the cable 30 whose wiring operation has been completed, only the cable 30 on which the wiring operation is to be performed is able to be arranged in the wiring image 6. Thus, the difficult designation of a socket to be inserted or a wiring route due to the existence of other cables 30 can be avoided.

The operator is able, for any reason, to acquire the connector 31 of the cable 30 to be used in the wiring operation. It is also possible for the RF reader 3 to read the tag ID 4a of the IC tag 32 of the connector 31 near the operator. Thus, although not illustrated in the attached drawings, the CPU 61 refers to the cable information stored in the received cable information DB 2d, and confirms according to the tag ID 4a received from the RF reader 3 whether or not the operator has held the connector 31 of the appropriate cable 30. If it is confirmed that the connector 31 of the appropriate connector 31 is not held, the message about the information is displayed on the display device of the output device 64 to propel the operator to hold the connector 31 of the appropriate cable 30 with his or her hand.

In the present embodiment, the wiring operation for installing the cable 30 is assumed, but the assumed wiring operation can refer to a change by removing or exchanging the cable 30 or changing a part (socket) for connection. In addition, although the installing operation support device 1 generates the wiring image 6, the image can be generated by the 3D modeling system 2. Thus, the installing operation support device 1 can be realized using a plurality of devices.

The stepwise instructions for the operation content are issued by switching the data used in the instructions in the order of: corresponding socket 1 data → passage position data and binding position data → corresponding socket 2 data; or passage position data and binding position data → corresponding socket 1 data → corresponding socket 2 data. The order can be arbitrarily selected by the operator.

### <Second Embodiment>

In the first embodiment above, the 3D model data of part data is used as the image data for displaying of the part including a socket into which the cable 30 is inserted. The second embodiment allows an operator to grasp the wiring operation of the cable 30 without using the 3D model data.

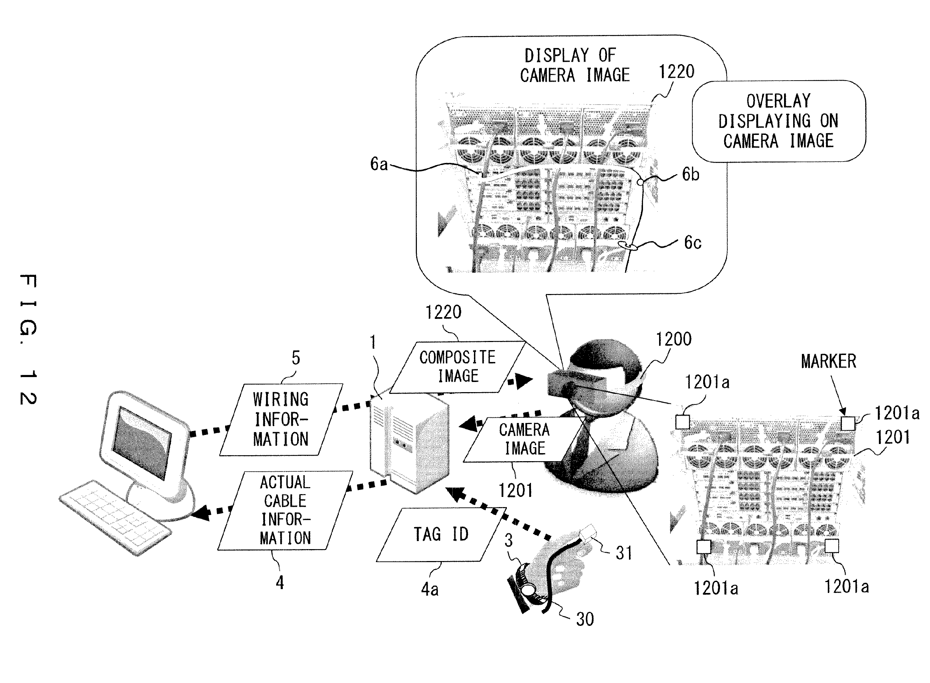

FIG. 12 is an explanatory view of the configuration of the installing operation support system created using the installing operation support device according to the second embodiment of the present invention. In the second embodiment, as illustrated in FIG. 12, the installing operation support system includes the installing operation support device 1, the 3D (three-dimensional) modeling system 2, the RF reader 3, and a head mount display (HMD) 1200.

The HMD 1200 is a well-known display used by attachment to the head of an operator. Although the detailed configuration is not specifically illustrated, it includes a display device, a camera, an input device, and a communication device. The communication device can perform short-distance wireless communications, as with, for example, the RF reader 3. Via the operation performed on the input device, an image can be shot using a camera, and the image obtained by the shooting operation (hereinafter referred to as a "camera image") can be transmitted.

The installing operation support device 1 according to the second embodiment acquires a camera image 1201 from the HMD 1200, generates a composite image 1220 by arranging the images of the cable 30 on the acquired camera image 1201, and transmits the generated image to the HMD 1200. FIG. 12 illustrates examples of the camera image 1201 and the composite image 1220.

A shot image in a range which includes four markers 1201a is assumed as the camera image 1201 as illustrated in FIG. 12. The four markers 1201a can be used in generating an image of the cable 30 arranged at the camera image 1201 and in determining the position of the arrangement. The designation of the shooting location can be performed by, for example, printing a two-dimensional code for the markers 1201a. The generation of the image of the cable 30 and the determination of the arrangement are performed by, for example, designating the position of the viewpoint in the virtual 3-dimensional space from the positions of the four markers 1201a. Thus, the image of the cable 30 is generated in accordance with the relationship between the operation (HMD 1200) which has shot the image and the part (in this example, the rack 51 or the server 52) and the shooting conditions, and the composite image 1220 is generated by arranging the image of the generated cable 30 with the camera image 1201, thereby allowing the operator to grasp the wiring route of the cable 30, that is, the socket into which the connector 31 is to be inserted, and the arrangement of the signal line. In the second embodiment as with the first embodiment, the socket 6a into which the connector 31 of the cable 30 is to be inserted, the passage position 6b of the signal line of the cable 30, and the binding position 6c can be easily recognized visually by the highlighting on the display.

The camera image 1201 indicates the part actually seen by the operator. Therefore, unlike the image expressed by the 3D model data, there is a small possibility that the operator will feel that the appearance of the image is unnatural. Accordingly, the operator can more easily grasp the socket into which the connector 31 is to be inserted, the passage position, etc.

The installing operation support device 1 according to the second embodiment may fundamentally have the same configuration for the function of the installing operation support device 1 as the first embodiment illustrated in FIG. 2. For example, with the configuration of the function illustrated in FIG. 2, the wiring information acquisition unit 13 can acquire the camera image 1201 from the HMD 1200, and the wiring information processing unit 14a of the control unit 14 can generate the composite image 1220 using the camera image 1201. The function of transmitting the composite image 1220 to the HMD 1200 can be assigned to the output unit 15. Thus, with the configuration illustrated in FIG. 11, when the function is assigned, the wiring information acquisition unit 13 can be realized by the CPU 61, the memory 62, the external storage device 65, the necessary connection device 67, the wireless communication device 68, and the bus 69. As with the first embodiment, the control unit 14 (wiring information processing unit 14a) is realized by the CPU 61, the memory 62, the external storage device 65, and the bus 69. The output unit 15 is realized by the CPU 61, the memory 62, the external storage device 65, the wireless communication device 68, and the bus 69.

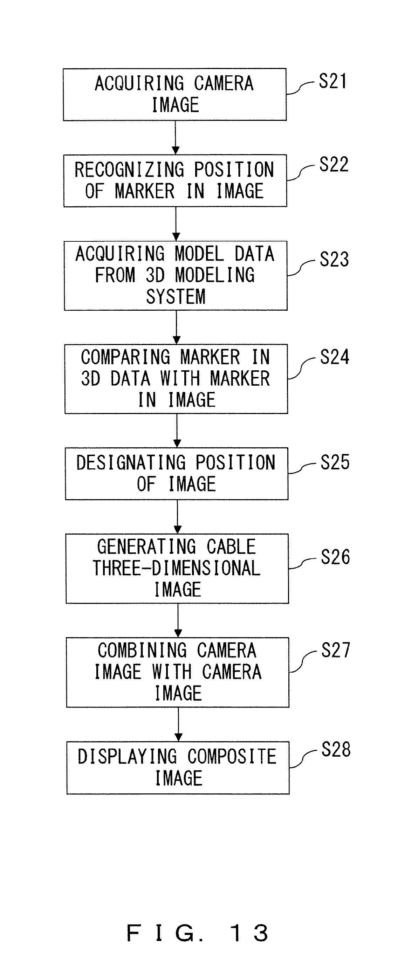

In the first embodiment, the wiring operation is supported by the CPU 61 performing the installing operation supporting process illustrated in FIGS. 10A and 10B. Also in the second embodiment, a fundamentally similar installing operation supporting process can be performed by the CPU 61. However, in the second embodiment, the instruction to start the wiring operation by the operator in step OP1 can be issued by transmitting the camera image 1201 from the HMD 1200. The target position of the wiring operation can be designated by recognizing the markers 1201a in the camera image 1201. The camera image 1201 is used in generating the composite image 1220 to be displayed. Thus, in the second embodiment, the composite image generating process illustrated in FIG. 13 is performed in step S1 in FIG. 10A. The composite image generating process is described below in detail with reference to FIG. 13.

First in step S21, the CPU 61 acquires the camera image 1201 received from the HMD 1200. In the next step S22, the CPU 61 recognizes and extracts the positions of the markers 1201a in the camera image 1201, and designates the position indicated by the markers 1201a. Then, control is passed to step S23, and the CPU 61 acquires from the 3D modeling system 2 the part data (3D model data) of the part existing in the designated position, the wiring information, and the configuration list data. After acquiring the data, control is passed to step S24.

The positions at which the markers 1201a are attached are predetermined. Thus, the 3D model data indicates that there are the markers 1201a at the predetermined positions.
In step S24, the CPU 61 compares the markers 1201a of the image on which the 3D model data is arranged according to the configuration list data with the markers 1201a in the camera image 1201. In the next step S25, the CPU 61 designates from the result of the comparison the relationship of the positions between the parts in the camera image 1201 and the operator, that is, the viewpoint in the virtual 3-dimensional space. Afterwards, control is passed to step S26.

In step S26, according to the designated viewpoint, the three-dimensional image of the cable 30 whose wiring route is expressed by the wiring information having the smallest wiring order data value not including those for which the wiring operations have been completed. Next, in step S27, the CPU 61 generates the composite image 1220 by combining the three-dimensional image with the camera image 1201. In step S28 to which control is passed after the generation of the image, the CPU 61 transmits the composite image 1220 to the HMD 1200 and displays the image. After the transmission, the composite image generating process is terminated.

The subroutine processes executed in step S7 in FIG. 10A and steps S10 and S14 in FIG. 10B change the content of the display of the composite image 1220 displayed by the HMD 1200, that is, realize the highlighted display of the socket 6a, the passage position, the binding position, etc. When the process in step S1 is performed again by the determination of NO in step S16, only the processes in steps S26 through S28 of the composite image generating process in FIG. 13 are performed, thereby generating the composite image 1220 for supporting the next wiring operation.

### <Third Embodiment>

In the first and second embodiments above, the wiring operation is supported by displaying an image on the display device. On the other hand, according to the third embodiment, the wiring operation is supported with great versatility maintained using a device different from the display device.

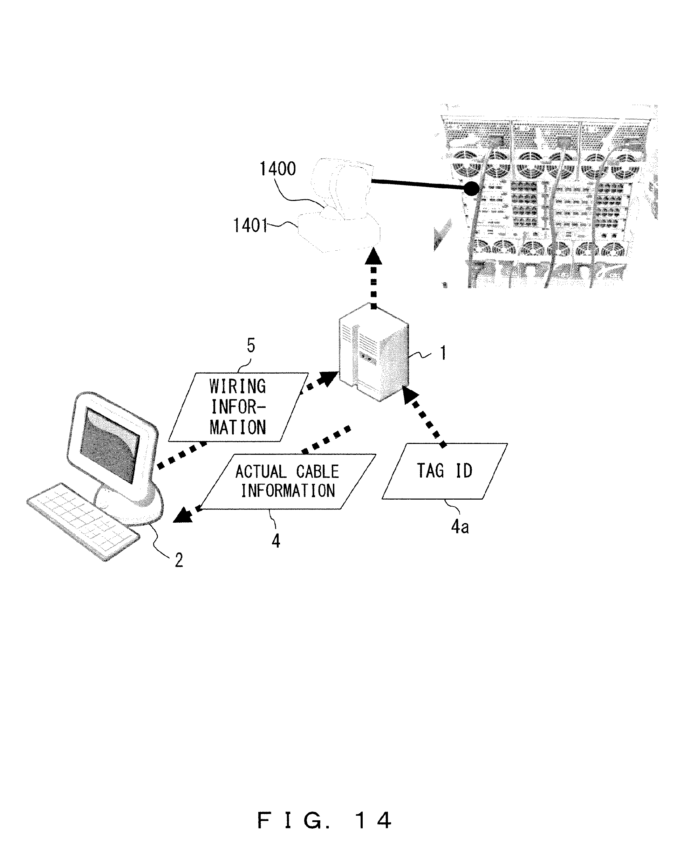

FIG. 14 is an explanatory view of the configuration of the installing operation support system created using the installing operation support device according to the third embodiment of the present invention. In the third embodiment, as illustrated in FIG. 14, the installing operation support system of a wiring route includes the installing operation support device 1, the 3D (three-dimensional) modeling system 2, the RF reader 3 (not illustrated in FIG. 14), a laser pointer 1400, and a pan tilt table 1410. With this configuration, the wiring route of the cable 30 is specified by the laser pointer 1400. The pan tilt table 1410 is a movable device for a change in the direction of the laser beam irradiation by the laser pointer 1400. Thus, the installing operation support device 1 according to the third embodiment is realized for controlling the pan tilt table 1410 and specifying the socket into which the connector 31 is inserted, the passage position and/or the binding position of a signal line using the laser beam emitted by the laser pointer 1400.

The installing operation support device 1 according to the third embodiment, as with the second embodiment, may fundamentally have the same configuration in the function of the installing operation support device 1 according to the first embodiment illustrated in FIG. 2. In this case, the wiring information processing unit 14a in FIG. 2 has the function of, for example, calculating the amount of vertical and horizontal control (number of rotations) relative to the pan tilt table 1410 according to the wiring information. The output unit 15 has the function of operating the pan tilt table 1410 on the basis of the amount of control. With the configuration illustrated in FIG. 11, to operate the pan tilt table 1410, the wireless communication device 68 can be replaced with an interface for the pan tilt table 1410 and the laser pointer 1400. If the interface is provided instead of the wireless communication device 68, the output unit 15 is realized by the CPU 61, the memory 62, the external storage device 65, two interfaces, and the bus 69.

The position where the laser beam is irradiated depends on the relationship of the positions of the laser pointer 1400 and the part. Thus, according to the third embodiment, it is necessary to adjust the laser beam so that it can irradiate an appropriate position.

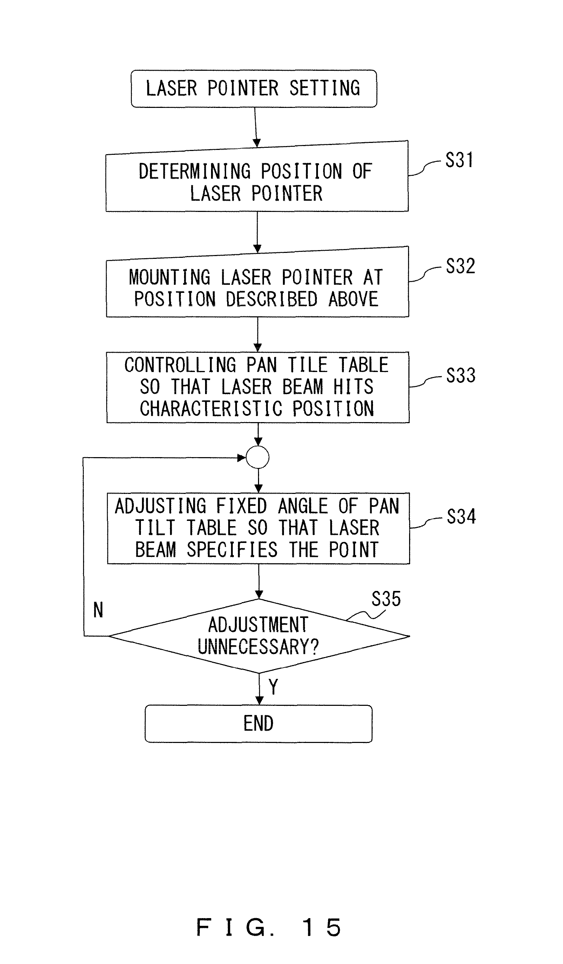

FIG. 15 is a flowchart for explanation of the procedure of laser pointer setting performed for the adjustment. The laser pointer setting is performed by an operator or the like to adjust the pan tilt table 1410 to an appropriate state so that the wiring route can be appropriately specified using the laser beam. The adjusting operation is performed by directing the CPU 61 to execute the subprogram prepared for the installing operation support program above. First, the operator determines the position where the laser pointer 1400 is mounted (step S31), and mounts the laser pointer 1400 at the determined position on the pan tilt table 1410 (step S32).

After mounting the pointer, the operator operates the input device provided for or connected to the installing operation support device 1, allows the laser pointer 1400 to emit a laser beam, and drives the pan tilt table 1410 so that the laser beam can irradiate a characteristic position on the part, for example, one socket (step S33). Next, the operator operates the input device and adjusts the pan tilt table 1410 so that the laser beam can irradiate the characteristic position (step S34). After the adjustment, it is determined whether or not the next adjustment is required. When the adjustment has been performed for a predetermined number of times of adjustment, the determination is YES, thereby terminating the laser pointer setting. If the adjustment has not been performed for the predetermined number of times, then the determination is NO, thereby returning control to step S33. Thus, an adjustment is made with the feature point to which the laser beam is emitted changed.

By repeating the adjustment above, the subprogram of the installing operation support program learns the correspondence among the positions on the virtual 3-dimensional space, the amount of change in position, and the number of rotations which drive the pan tilt table 1410 depending on the amount of change, and the result of the learning is stored. Thus, the wiring route when the wiring operation is supported is specified by calculating the number of rotations of the pan tilt table 1410 from the position on the virtual 3-dimensional space indicated by the wiring information using the result of the learning. The wiring route itself can be fundamentally specified by performing the installing operation supporting process as illustrated in FIGS. 10A and 10B, as with the first and second embodiments.

In the present embodiment (first through third embodiments), the route which passes the signal line of the cable 30 is specified with the passage position and the binding position highlighted, but any other methods can be adopted so far as the route through which the signal line passes can be easily presented to an operator. That is, the method of specifying a route is not specifically limited. A route can be specified using a display device or a laser pointer 1400, but the route can be specified using other devices. Thus, it is obvious that a number of variations are available.

## Claims

1. A program used to direct a computer having a storage unit for storing identification information for identification of a part associated with installation information for designation of a location where the part is installed in a first apparatus, for performing
a process of retrieving the identification information of the part from the storage unit upon receipt of the identification information from a second apparatus for reading the identification information of the part, and of generating a first composite image by combining the installation information corresponding to retrieved identification information with an image of the first apparatus.

2. The program according to claim 1, wherein
the part is located at a specified position of a linear structure.

3. The program according to claim 2, wherein:
the storage unit further associates and stores route information about a route for arrangement and installation of the linear structure in the first apparatus; and
the computer executes a process of retrieving the identification information from the storage unit and generating a second composite image by combining retrieved route information with an image of the first apparatus.

4. An installing operation support device, comprising:
a storage unit storing identification information for identification of a part associated with installation information for designation of a position where the part is installed in a first apparatus;
an identification information reception device receiving the identification information about the part to be read and transmitting it by a second apparatus; and
an image generation device retrieving the identification information received by the identification information reception device from the storage unit, and generating a first composite image by combining installation information corresponding to the retrieved identification information with an image of the first apparatus.

5. An installing operation supporting method, comprising:
storing in a storage device identification information for identification of a part associated with installation information for designation of a position where the part is installed in a first apparatus;
receiving the identification information about the part to be read and transmitting it by a second apparatus; and
retrieving the received identification information from the storage device, and generating a first composite image by combining installation information corresponding to the retrieved identification information with an image of the first apparatus.

6. An installing operation support system comprising
an installing operation support device supporting an operation of installing a part in a first apparatus; a second apparatus reading identification information about the part and transmitting the information to the installing operation support device; a projection device for projecting a position where the part is installed on the first apparatus; and a movable device changing a position at which the projection device projects on the first apparatus, wherein
the installing operation support device comprises:
a storage unit storing identification information for identification of a part associated with installation information for designation of a position where the part is installed in a first apparatus;
an identification information reception device receiving the identification information about the part to be read and transmitted by a second apparatus; and
a control device retrieving the identification information received by the identification information reception device from the storage unit, and controlling the movable device using installation information corresponding to the retrieved identification information.
